Europäisches Patentamt

European Patent Office

Office européen des brevets

(11) Publication number: **0 392 655 A2**

## EUROPEAN PATENT APPLICATION

(21) Application number: 90302206.9

(22) Date of filing: 01.03.90

(51) Int. Cl.5: **G06K 15/00, G06F 15/72**

(30) Priority: 06.03.89 US 319454

(43) Date of publication of application:
17.10.90 Bulletin 90/42

(84) Designated Contracting States:
**DE FR GB**

(71) Applicant: **XEROX CORPORATION**
**Xerox Square - 020**
**Rochester New York 14644(US)**

(72) Inventor: **Alazar, Roberto**
**7430 Corbin Avenue**
**Nr. 33 Reseda, CA. 91335(US)**

(74) Representative: **Hill, Cecilia Ann et al**
**Rank Xerox Limited Patent Department 364**
**Euston Road**
**London NW1 3BL(GB)**

(54) **Image generation system and method.**

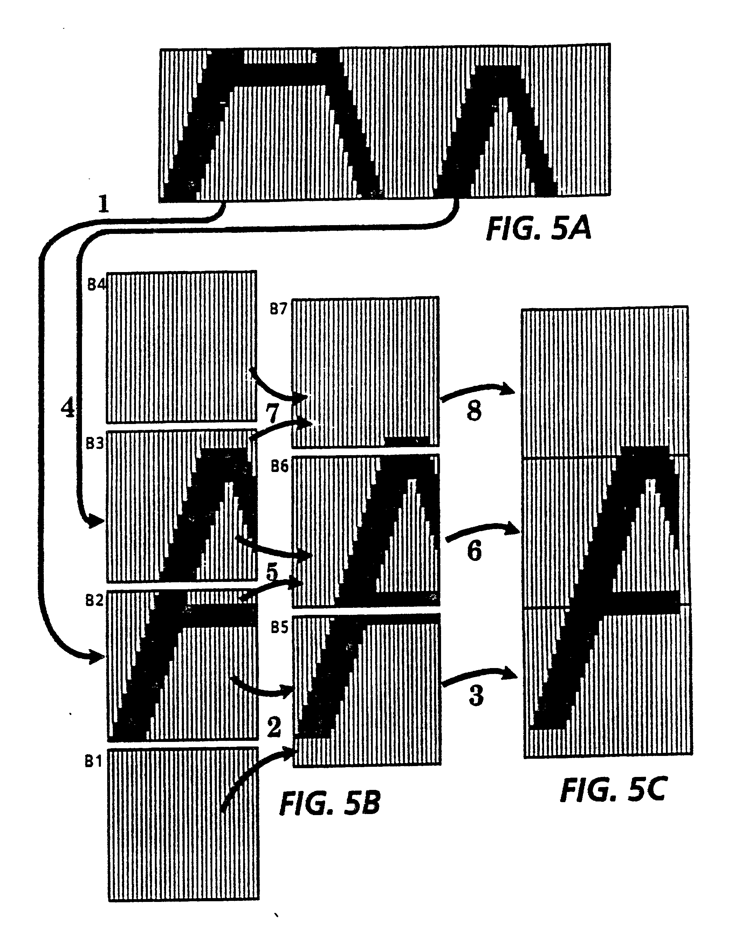

(57) This invention relates to an image generating system and method, and more especially to the structuring, handling, and storing of data in an image generating system so as to use burst-mode memory access for bitblt (bit block transfer). Successive bits (or bit-groups) within a word correspond to successive pixels in raster-scan order. Successive words correspond to a pixel strip across successive scanlines (Fig. 5A). The strip's height (in pixels) is the number of bits (or bit-groups) per word. These strips are transferred in burst mode (Fig 5B) from bitmap memory to an aligning device (typically processor registers) and thence to the image buffer (Fig. 5C), for a faster bitblt, and hence faster system operation.

FIG. 5A

FIG. 5B

FIG. 5C

## IMAGE GENERATION SYSTEM AND METHOD

This invention relates to an image generation system and method, and more especially to the structuring, handling, and storing of data in an image generating system.

An image generation system is the component of an electronic printer or other visual display or transmission system which produces a stream of bits (binary digits) in raster-scan order to be sent to the marking engine of an electronic printer, to a cathode-ray-tube (CRT) screen, to a facsimile (FAX) transmitter, or to any other raster output device.

Image generation systems use random access memory (RAM) to store bit-vectors called words. The two basic parts of an image generating system's RAM are the image buffer and the bitmap memory. (Both are variously named in the industry.) The image buffer accumulates data to be sent to the raster output device. The bitmap memory stores bitmaps. A bitmap is a block of bits (or bit-groups) mapping the image of a letter, number, punctuation mark, photometrically scanned or computer-generated image, or any other digital image.

An image generating method consists of three processes: rasterization, bitblt, and readout. Rasterization creates bitmaps. Bitblt (acronym of "bit block transfer") transfers bit blocks; more precisely, bitblt copies bitmaps to the image buffer. Readout sends accumulated data from the image buffer to the raster output device.

All three processes are standard in the industry (see, e.g., "Is Custom BITBLT a RISC?" by Andrew C. Wilson in The Electronic System Design Magazine, September 1988.) Each of the three may use a hardware device, a software algorithm, or some combination. (Rasterization is usually software and readout is usually hardware.)

Rasterization occurs comparatively seldom, so its speed is not very important. Sometimes all the rasterization is done just once for the visual display or transmission system, even before it is built. In that case fonts are installed already rasterized.

On the other hand, a high readout speed is important and a high bitblt speed is essential. Typically, readout occurs once for each page printed (or displayed or transmitted). Typically, bitblt occurs thousands of times for each readout, because each separate occurrence of a character requires a separate bitblt.

Prior art optimizes readout by having image buffer data in raster-scan order. That is, successive bits (or bit-groups) within a word correspond to successive picture elements (pixels) in raster-scan order, and successive words correspond to successive pixel segments along a scan-line.

Image-buffer word-order would seem insignificant, because the image buffer is part of random access memory, so words may be accessed in any order. However, RAMs often provide a faster burst access mode for a sequence of consecutive words. Thus both readout and bitblt speed may depend upon image-buffer word-order.

The present invention provides a bitmap with i bits per bit group and j bit groups per word, corresponding to an image m pixels high (along the raster-scan direction) and n pixels wide (at right-angles to the raster-scan direction), wherein m is a multiple of j and k = m/j, comprising:

a sequence of n words corresponding to a strip of said image pixels high by n pixels long

(k-1) subsequent sequences, each of n words, corresponding to successive strips of said image, each strip j pixels high by n pixels long, said arrangement adapted to facilitate the use of burst-accesses for bitblt. The number (i) of bits per bit group may be equal to one or may be greater than one.

The present invention also provides a method of rasterizing an image m pixels high (along the raster-scan direction) and n pixels wide (at right-angles to the raster-scan direction) into bitmaps with i bits per bit group and j bit groups per word, wherein m is a multiple of j and k = m/j, consisting of:

dividing the image into k horizontal strips, each strip j pixels high (along the raster-scan direction) by n pixels long (at right-angles to the raster-scan direction)

creating a sequence of n words corresponding to the first such strip by assigning a numeric value to each bit-group in each word of the strip that best represents the corresponding pixel of the image

creating (k-1) subsequent sequences, each of n words corresponding to the subsequent such strips, by assigning a numeric value to each bit-group in each word of the strip that best represents the corresponding pixel of the image,

According to another aspect of the invention there is provided a method of bitblt (bit block transfer) of bitmaps to image buffer consisting of:

a burst-load from bitmap memory to the aligning device

alignment along the raster-scan direction (i.e. along word length)

a burst-store from the aligning device to image buffer

repetition of those three steps until bitblt is completed, the new feature being the use of burst mode memory accesses.

According to yet another aspect of the present invetion there is provided a method of readout of image buffer to a raster output device consisting of: readout of a word of image buffer into a segment of a scanline

readout of a word of image buffer to the next segment of a scanline from word address higher than the previous word address by the number of scanlines in the raster output

repeat of the previous two steps until the whole scanline has been sent

repeat of the previous three steps until all scanlines have been sent.

The present invention further provides an image generation system including a bitmap memory for storing a bitmap of an image m pixels along the raster scan direction by n pixels at right angles to the raster scan direction, and an image buffer which receives bit maps copied from the memory and accumulates data for readout to a raster output device, in which the bitmap of an image stored in the memory comprises k successive sequences each of n words with j bit groups per word (when jk = m), each sequence corresponding to a respective one of k successive strips of said image each of which strips is j pixels along the raster-scan direction by n pixels at right angles to the raster-scan direction.

Bitmaps may be copied from the bitmap memory to the image buffer using burst mode memory accesses. Bit maps may be transferred in burst mode from the memory to an aligning device for alignment along the raster scan direction, the aligning device then being burst-stored to the image buffer.

The readout of the image buffer to the raster output device may comprise:

reading out a word of image buffer into a segment of a scan line;

reading out a word of image buffer to the next segment of a scan line from the word address greater than the previous word address by the number of scan lines in the raster output;

repeating the previous two steps until the whole scanline has been sent and

repeating the previous three steps until all scanlines have been sent.

By way of example, methods and a system in accordance with the invention will be described with reference to the accompanying drawings, in which:

Fig. 1A symbolizes a contour description of the letter "A."

Fig. 1B symbolizes a conceptual stage in rasterization.

Fig. 1C illustrates a bitmap in bitmap memory, in the prior art

Fig. 2A illustrates a bitmap in bitmap memory, in the prior art, the same as Fig. 1C.

Fig. 2B illustrates aligning hardware used (processor registers), in the prior art.

Fig. 2C illustrates a segment of the image buffer, in the prior art.

Fig. 3A illustrates a segment of the image buffer, in the prior art, same as Fig 2C.

Fig. 3B illustrates part of one scanline of the raster-scan-order data stream to the raster output device, in the prior art

Fig. 4A symbolizes a contour letter "A," the same as Fig. 1A.

Fig. 4B symbolizes a conceptual stage in rasterization.

Fig. 4C illustrates a bitmap in bitmap memory.

Fig. 5A illustrates a bitmap in bitmap memory, the same as Fig. 4C

Fig. 5B illustrates the aligning hardware used (blocks of 32 processor registers).

Fig. 5C illustrates three segments of the image buffer.

Fig. 6A illustrates four segment of the image buffer, similar to Fig 5C.

Fig. 6B illustrates part of one scanline of the raster-scan-order data stream to the raster output device (the same as Fig. 3B).

This description relates to an image generating system, and more especially to the structuring, handling, and storing of data in an image generating system so as to use burst-mode memory access for bitblt.

An image generating system is the component of an electronic visual display or transmission system which produces a stream of bits (binary digits) in raster-scan order to be sent to the raster output device. Image generating systems use random access memory (RAM) to store bit-vectors called words. The two basic parts of an image generating system's RAM are the image buffer and the bitmap memory. The image buffer accumulates data to be sent to the raster output device. The bitmap memory stores bitmaps. A bitmap is a block of bits (or bit-groups) mapping the image of a letter, number, punctuation mark, photometrically scanned or computer-generated image, or any other digital image.

An image generating system consists of three processes: rasterization, bitblt, and readout. Rasterization creates bitmaps. Bitblt (acronym of "bit block transfer") transfers bit blocks; more precisely, bitblt copies bitmaps to the image buffer. Readout sends accumulated data from the image buffer to the raster output device.

In the embodiment of the invention to be described below, successive bits (or bit-groups) within a word correspond to successive pixels in raster-scan order and successive words correspond to a pixel strip across successive scanlines. The strip's length in pixels at right angles to the raster-scan direction is the number of scanlines in the generated image, which is also the number of words in the strip. The strip's width in pixels along the raster-scan direction is the number of bits (or bit-groups) per word. These strips are transferred in burst mode from bitmap memory to an aligning device (typically processor registers) and thence to the image buffer, for a faster bitblt, and hence faster system operation.

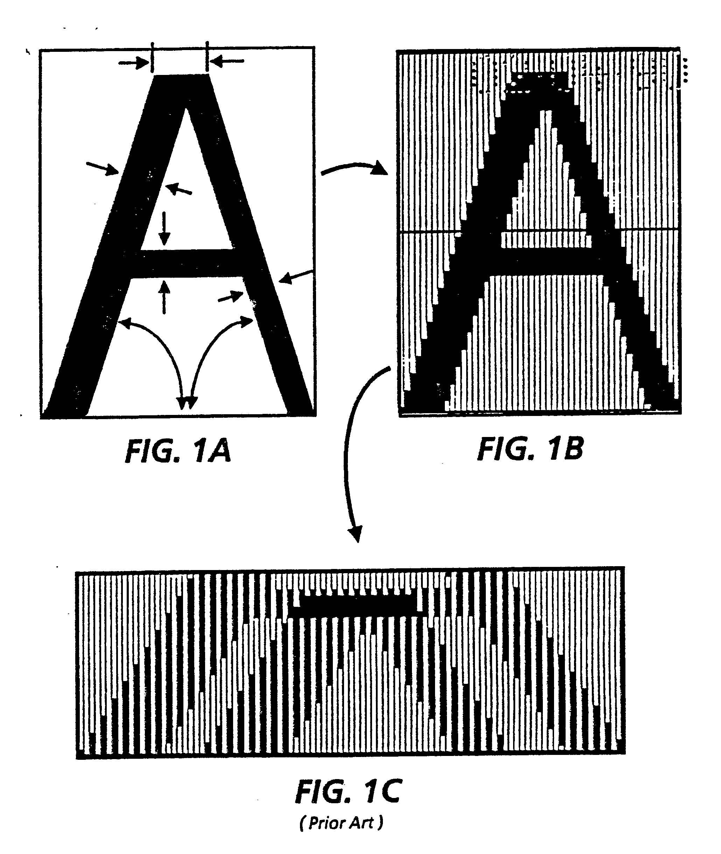

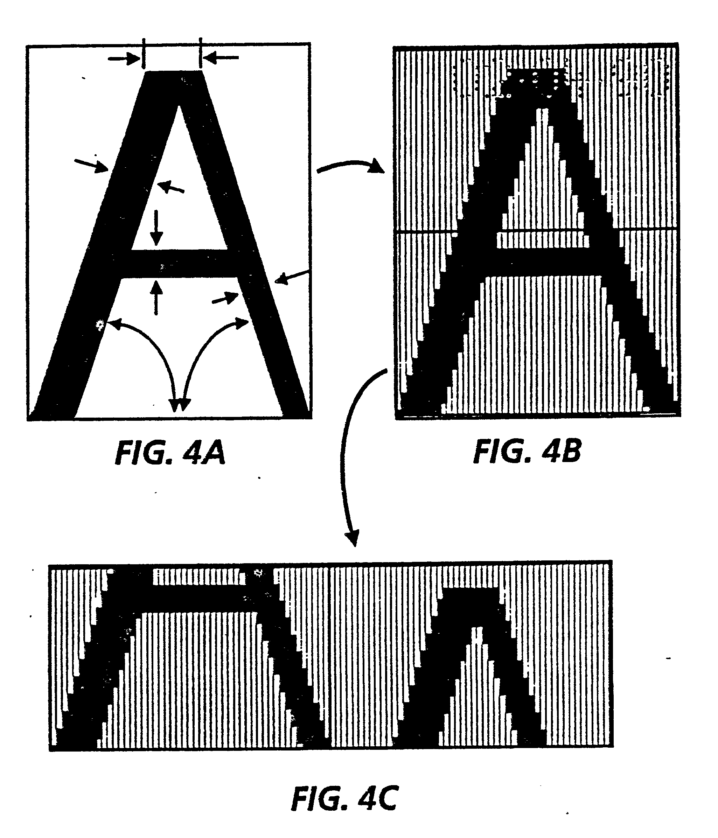

All the drawings except Figs. 1A and Fig. 4A show binary digital data. Each word is shown as a vertical rectangle 32 times as high as wide, darkened to represent 1-bits, with addresses increasing consecutively from left to right. The raster-scan direction is shown as vertical. A word of RAM shown just above another is at some (fairly large) address displacement above it; words are consecutive if shown side-by-side.

To understand the embodiment of the invention, it is necessary to understand the prior art, shown in Figs. 1,2, and 3. Figure 1 shows rasterization in the prior art. The input shown is a contour description of the letter "A," i.e. a numeric description in terms of stroke lengths, stroke slopes or angles, and the like. A direct illustration would be simply a table of these numbers, but the idea is symbolized by Fig. 1A. The rasterized version (the bitmap) is shown in Fig 1C.

The second process is the bitblt, or more accurately the bitblts, plural. There are many bitblts, typically thousands, before an image buffer is ready for readout.

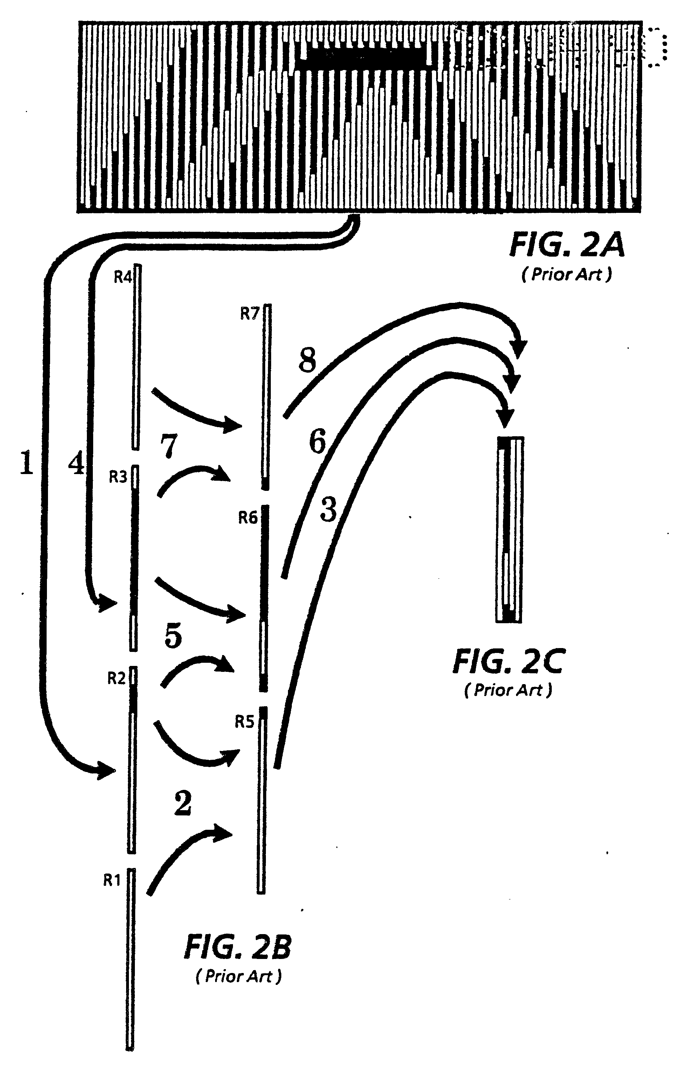

Figure 2 shows one step in one prior-art bitblt: two words of bitmap memory (Fig. 2A) are shifted and copied into three words of image buffer (Fig. 2C) using an aligning device as follows. First, the word of bitmap memory corresponding to the first 32 bits of a vertical slice of the image is copied (arrow 1) into register R2, then combined with empty register R1 for a double-shift-and-extract operation (arrows 2) into register R5, which is then stored (arrow 3) to the image buffer. Then the word of bitmap memory corresponding to the next (and in the case shown, last) 32 bits of the same vertical slice of the image is copied (arrow 4) into register R3, then combined with register R2 for a double-shift-and-extract operation (arrows 5) into register R6, which is then stored (arrow 6) to the image buffer. Then empty register R4 is combined with register R3 for a double-shift-and-extract operation (arrows 7) into register R7, which is then stored (arrow 8) to the image buffer. This whole step is repeated for the words of bitmap memory corresponding to each of the many vertical slices of the image (49 slices in the case shown) to accomplish one bitblt.

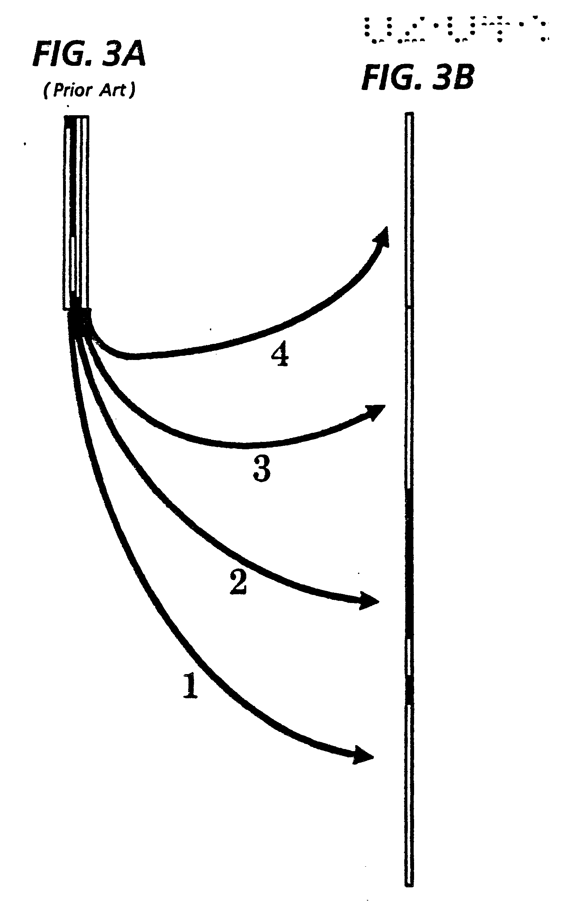

Readout for a page (or other display or transmission) begins after all its bitblts have finished. Figure 3 shows a small part of a prior-art readout: four successive (left-to-right) words of image buffer memory (Fig. 3A) are transmitted (arrows) as part of one scanline (Fig 3B). The entire image buffer's words are transmitted seriatim. (Because the words are transmitted seriatim, a burst access may be used.)

The embodiment of the invention to be described is shown in Figs. 4, 5, and 6. Figure 4 shows rasterization in accordance with the invention. The input shown is a contour description of the letter "A," identical to Fig. 1A. The rasterized version (the bitmap) is shown in Fig 4C, which has the same data as Fig. 1C but differently organized. More particularly, for an image m pixels along the raster-scan direction (where m is a multiple (k) of j) by n pixels at right-angles to the raster-scan direction, the rasterization method generally comprises: dividing the image into k parallel strips each j pixels along the raster-scan direction by n pixels at right-angles to the raster-scan direction; creating a sequence of n words corresponding to the first strip; and creating (k-1) subsequent sequences, each of n words, corresponding to the subsequent strips. Each strip is created by the known process of assigning, to each bit-group in each word of the strip, a numeric value that best represents (i.e approximates the color value of) the corresponding pixel of the image. In the particular example illustrated in Fig.4, the image is divided (Fig. 4B) into 2 strips each being 32 pixels high (i.e. along the raster-scan direction) by 49 pixels long (i.e. at right-angles to the raster-scan direction) to create 2 sequences (Fig. 4C) each of 49 words with 32 bit groups per word (i.e. k = 2, j = 32 and n = 49). If each bit group comprises one bit, that means that each word of bitmap memory is 32 bits long. Comparing Figs. 1C and 4C, the first words are the same, the second word of Fig 1C is the first word of the second half of Fig 4C, the third word of Fig 16 is the second word of Fig 4C, and so on.

The second process in the generation of an image consists of the many bitblts in accordance with the invention: before an image buffer is ready for readout. Figure 5 shows a step in bitblt in accordance with the invention: two 32-word cells of bitmap memory (Fig. 5A) are shifted and copied into three 32-word cells of image buffer (Fig. 5C) using an aligning device as follows. First, the cell of bitmap memory corresponding to the first 32 bits of 32 vertical slices of the image is burst-copied (arrow 1) into register block B2, then combined with empty register block B1 for 32 double-shift-and-extract operations (arrows 2) into register block B5, which is then burst-stored (arrow 3) to the image buffer. Then the cell of bitmap memory corresponding to the next (and in the case shown, last) 32 bits of the same 32 vertical slices of the image is burst-copied (arrow 4) into register block B3, then combined with register block B2 for 32 double-shift-and-extract operations (arrows 5) into register block B6, which is then burst-stored (arrow 6) to the image buffer. Then empty register block B4 is combined with register block B3 for 32 double-shift-and-extract operations (arrows 7) into register block B7, which is then burst-stored (arrow 8) to the image buffer. This whole step is repeated for the cells of bitmap memory corresponding to the other blocks of vertical slices of the image (one more block of 17 slices, in the case shown) to accomplish one bitblt.

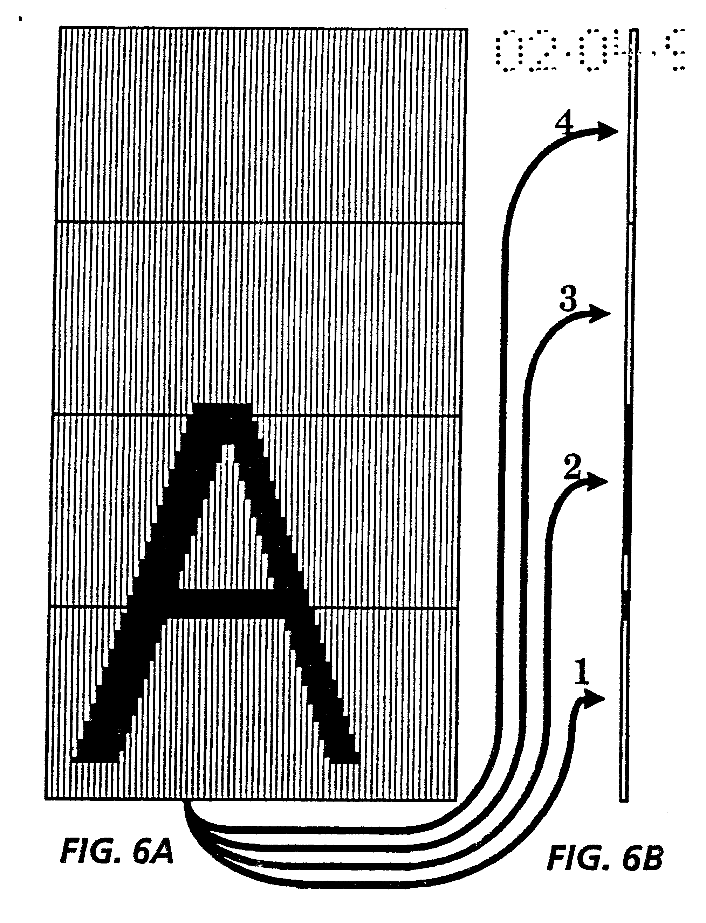

Readout for a page (or other display) does not begin until all its bitblts have finished. Figure 6 shows a small part of an invention readout: four non-successive, in fact widely-separated (bottom-to-top) words of image buffer memory (Fig. 6A) are transmitted (arrows) as part of one scanline (Fig 6B, identical to Fig. 3B). The words are transmitted in this order until the entire image buffer has been sent.

## Claims

1- A bitmap with j bit groups per word, corresponding to an image m pixels along the raster-scan direction by n pixels at right-angles to the raster-scan direction, wherein m is a multiple (k) of j, comprising:
a sequence of n words corresponding to a strip of said image j pixels along the raster-scan direction by n pixels at right-angles to the raster-scan direction, and
(k-1) subsequent sequences, each of n words, corresponding to successive strips of said image, each strip j pixels along the raster-scan direction by n pixels at right-angles to the raster-scan direction (Fig. 46).

2- A bitmap as claimed in claim 1, in which there is one bit per bit group.

3- A bitmap as claimed in claim 1, in which there is more than one bit per bit group.

4- A rasterized font of which any character bitmap is as claimed in any one of the preceding claims.

5- A method of rasterizing an image m pixels along the raster-scan direction by n pixels at right-angles to the raster-scan direction into a bitmap with j bit groups per word, wherein m is a multiple (k) of j, comprising:
dividing the image into k horizontal strips, each strip being j pixels along the raster-scan direction by n pixels at right-angles to the raster-scan direction

creating a sequence of n words corresponding to the first such strip, and creating (k-1) subsequent sequences, each of n words, corresponding to the subsequent such strips.

6- A method of bitblt (bit block transfer) of bitmaps from a bitmap memory to an image buffer, consisting of:
a burst-load from the bitmap memory to an aligning device;
alignment along the raster-scan direction (i.e. along word length);
a burst-store from the aligning device to the image buffer, and
repetition of those three steps until bitblt is completed

7- A method of readout of an image buffer to a raster output device consisting of:
readout of a word of image buffer into a segment of a scanline;
readout of a word of image buffer to the next segment of that scanline from word address greater than the previous word address by the number of scanlines in the raster output;
repeat of the previous two steps until the whole scanline has been sent, and
repeat of the previous three steps until all scanlines have been sent

8- An image generating system method comprising in combination:
a rasterization method as claimed in claim 5;
a bitblt method as described claimed in claim 6 and
a readout method as claimed in claim 7.

9- A method as claimed in claim 6 or claim 8, where the aligning device consists of computer processor registers.

10- An image generation system comprising a bitmap memory, an image buffer and a raster output device, the system being operable to:
create a bitmap of an image for storage in the memory by a rasterization method as claimed in claim 5;
copy bitmaps from the memory to the buffer by a method as claimed in claim 6, and
read out the buffer to the output device by a method as claimed in claim 7.

**FIG. 1A**

**FIG. 1B**

**FIG. 1C**
(Prior Art)

*FIG. 2A*
( Prior Art )

*FIG. 2B*
( Prior Art )

*FIG. 2C*
( Prior Art )

# FIG. 3A

(Prior Art)

# FIG. 3B

4

3

2

1

**FIG. 4A**

**FIG. 4B**

**FIG. 4C**

FIG. 5A

FIG. 5B

FIG. 5C

FIG. 6A

FIG. 6B